# EUROPEAN PATENT SPECIFICATION

(11) **EP 0 765 509 B1**
(45) Date of publication and mention of the grant of the patent: **21.11.2001**
(21) Application number: 96910776.2
(22) Date of filing: 10.04.1996
(51) Int. Cl.: G06K 15/10

(54) **INTEGRATED FAULT TOLERANCE IN PRINTING MECHANISMS**
INTEGRIERTE FEHLERTOLERANZ IN DRUCKMECHANISMEN
TOLERANCE DE DEFAUTS INTEGREE DANS DES MECANISMES D'IMPRESSION

(30) Priority: 12.04.1995 AU PN232495
(43) Date of publication of application: 02.04.1997
(73) Proprietor: EASTMAN KODAK COMPANY, Rochester, New York 14650-2201 (US)
(72) Inventor: SILVERBROOK, Kia c/o EASTMAN KODAK COMPANY, Rochester, NY 14650-2201 (US)
(74) Representative: Reichert, Werner F., Dr. rer.nat., Dipl.-Phys.
(86) International application number: US9604829
(87) International publication number: WO9632695

(56) References cited:
- EP-A- 0 498 291
- EP-A- 0 602 582
- US-A- 4 096 578
- US-A- 4 326 813

## Description

### Field of the Invention

The present invention is in the field of computer controlled printing devices. In particular, the field is fault tolerance for drop on demand (DOD) printing systems.

### Background of the Invention

Many different types of digitally controlled printing systems have been invented, and many types are currently in production. These printing systems use a variety of actuation mechanisms, a variety of marking materials, and a variety of recording media. Examples of digital printing systems in current use include: laser electrophotographic printers; LED electrophotographic printers; dot matrix impact printers; thermal paper printers; film recorders; thermal wax printers; dye diffusion thermal transfer printers; and ink jet printers. However, at present, such electronic printing systems have not significantly replaced mechanical printing presses, even though this conventional method requires very expensive setup and is seldom commercially viable unless a few thousand copies of a particular page are to be printed. Thus, there is a need for improved digitally controlled printing systems, for example, being able to produce high quality color images at a highspeed and low cost, using standard paper.

Inkjet printing has become recognized as a prominent contender in the digitally controlled, electronic printing arena because, e.g., of its non-impact, low-noise characteristics, its use of plain paper and its avoidance of toner transfers and fixing.

Many types of ink jet printing mechanisms have been invented. These can be categorized as either continuous ink jet (CIJ) or drop on demand (DOD) ink jet. Continuous ink jet printing dates back to at least 1929: Hansell, US Pat. No. 1,941,001.

Sweet et al US Pat. No. 3,373,437, 1967, discloses an array of continuous ink jet nozzles where ink drops to be printed are selectively charged and deflected towards the recording medium. This technique is known as binary deflection CIJ, and is used by several manufacturers, including Elmjet and Scitex.

Hertz et al US Pat. No. 3,416,153, 1966, discloses a method of achieving variable optical density of printed spots in CIJ printing using the electrostatic dispersion of a charged drop stream to modulate the number of droplets which pass through a small aperture. This technique is used in ink jet printers manufactured by Iris Graphics.

Kyser et al US Pat. No. 3,946,398, 1970, discloses a DOD ink jet printer which applies a high voltage to a piezoelectric crystal, causing the crystal to bend, applying pressure on an ink reservoir and jetting drops on demand. Many types of piezoelectric drop on demand printers have subsequently been invented, which utilize piezoelectric crystals in bend mode, push mode, shear mode, and squeeze mode. Piezoelectric DOD printers have achieved commercial success using hot melt inks (for example, Tektronix and Dataproducts printers), and at image resolutions up to 720 dpi for home and office printers (Seiko Epson). Piezoelectric DOD printers have an advantage in being able to use a wide range of inks. However, piezoelectric printing mechanisms usually require complex high voltage drive circuitry and bulky piezoelectric crystal arrays, which are disadvantageous in regard to manufacturability and performance.

Endo et al GB Pat. No. 2,007,162, 1979, discloses an electrothermal DOD inkjet printer which applies a power pulse to an electrothermal transducer (heater) which is in thermal contact with ink in a nozzle. The heater rapidly heats water based ink to a high temperature, whereupon a small quantity of ink rapidly evaporates, forming a bubble. The formation of these bubbles results in a pressure wave which cause drops of ink to be ejected from small apertures along the edge of the heater substrate. This technology is known as Bubblejet™ (trademark of Canon K.K. of Japan), and is used in a wide range of printing systems from Canon, Xerox, and other manufacturers.

Vaught et al US Pat. No. 4,490,728, 1982, discloses an electrothermal drop ejection system which also operates by bubble formation. In this system, drops are ejected in a direction normal to the plane of the heater substrate, through nozzles formed in an aperture plate positioned above the heater. This system is known as Thermal Ink Jet, and is manufactured by Hewlett-Packard. In this document, the term Thermal Ink Jet is used to refer to both the Hewlett-Packard system and systems commonly known as Bubblejet™.

Thermal Ink Jet printing typically requires approximately 20 µJ over a period of approximately 2 µs to eject each drop. The 10 Watt active power consumption of each heater is disadvantageous in itself and also necessitates special inks, complicates the driver electronics and precipitates deterioration of heater elements.

Other ink jet printing systems have also been described in technical literature, but are not currently used on a commercial basis. For example, U.S. Patent No. 4,275,290 discloses a system wherein the coincident address of predetermined print head nozzles with heat pulses and hydrostatic pressure, allows ink to flow freely to spacer-separated paper, passing beneath the print head. U.S. Patent Nos. 4,737,803 and 4,748,458 disclose ink jet recording systems wherein the coincident address of ink in print head nozzles with heat pulses and an electrostatically attractive field cause ejection of ink drops to a print sheet.

Each of the above-described inkjet printing systems has advantages and disadvantages. However, there remains a widely recognized need for an improved ink jet printing approach, providing advantages for example, as to cost, speed, quality, reliability, power usage, simplicity of construction and operation, durability and consumables.

The printing mechanism is based on a new printing principle called "Liquid Ink Fault Tolerant" (LIFT) Drop on Demand printing. In this document, the term "optical density" refers to a human perceived visual image darkness, and not to spectroscopic optical density *OD = A = log*_{*10*} *(I*_{*0*}*/I)*.

EP-A-0 498 291, which reflects the features of the preamble of claim 1, discloses an integrated print head with fault tolerance. The circuit detects and corrects three hardware faults: An open ' heater, an open drive transistor and a shorted drive transistor.

US-A-4,326,813 and US-A-4,096,578 mention a majority detection in a dot matrix printer.

WO-A-96/32272, filed by the same applicant, is directed to a similar subject matter.

### Summary of the invention

This invention is defined by claim 1. It involves the application of fault tolerance circuitry to large drop on demand print heads to improve manufacturing yield and service life. Specifically, the shift registers on an integrated print head are duplicated three-fold, and a circuit is implemented (the voting circuit) which only energizes the print heater if at least two of the three outputs of the shift registers indicate that the print nozzle is to be actuated. By this means, faults can occur anywhere in any one of the three shift registers while having no effect on the resultant image printed.

These faults may occur as the result of particulate contamination during the manufacturing process, in which case the inclusion of the fault tolerance circuitry disclosed herein can improve manufacturing yield.

Conversely, the fault may occur as a failure of the integrated electronic components in the field. In this case, the inclusion of the fault tolerance circuitry can improve the operating life of the print head.

The circuitry is so arranged that a fault in the voting circuit will not cause dots to be printed where none are specified. This is important, as additional types of fault tolerance can print missing dots, but cannot erase erroneously printed dots.

### Brief Description of the Drawings

Figure 1 shows a block schematic diagram of print head drive circuitry for practice of the invention.
Figure 2 shows a generalized block diagram of a printing system using a print head
Figure 3 shows a block diagram of a large print head with integrated drive circuitry
Figure 4 shows a logic diagram of a single drive module with fault tolerance and a 'voting' circuit.
Figure 5 shows a circuit diagram of a single drive module with fault tolerance and a 'voting' circuit.

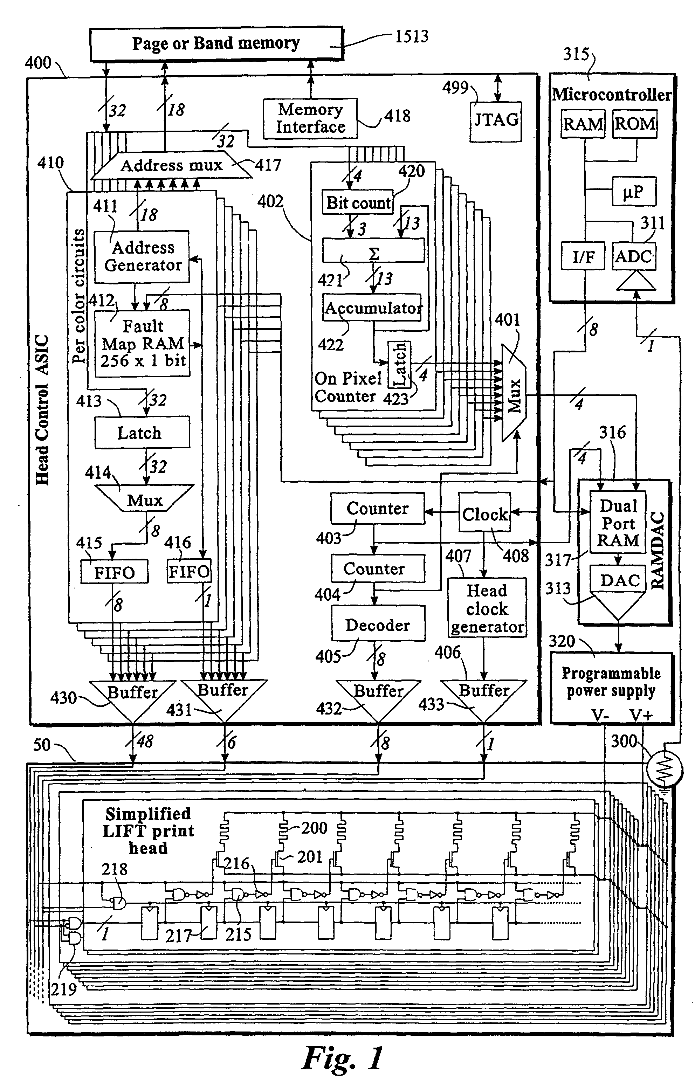

Figure 1 is a block schematic diagram showing electronic operation of an example head driver circuit in accordance with this invention. This control circuit uses analog modulation of the power supply voltage applied to the print head to achieve heater power modulation, and does not have individual control of the power applied to each nozzle. Figure 1 shows a block diagram for a system using an 800 dpi pagewidth print head which prints process color using the CC'MM'YK color model. The print head 50 has a total of 79,488 nozzles, with 39,744 main nozzles and 39,744 redundant nozzles. The main and redundant nozzles are divided into six colors, and each color is divided into 8 drive phases. Each drive phase has a shift register which converts the serial data from a head control ASIC 400 into parallel data for enabling heater drive circuits. There is a total of 96 shift registers, each providing data for 828 nozzles. Each shift register is composed of 828 shift register stages 217, the outputs of which are logically anded with phase enable signal by a nand gate 215. The output of the nand gate 215 drives an inverting buffer 216, which in turn controls the drive transistor 201. The drive transistor 201 actuates the electrothermal heater 200. To maintain the shifted data valid during the enable pulse, the clock to the shift register is stopped the enable pulse is active by a clock stopper 218, which is shown as a single gate for clarity, but is preferably any of a range of well known glitch free clock control circuits. Stopping the clock of the shift register removes the requirement for a parallel data latch in the print head, but adds some complexity to the control circuits in the Head Control ASIC 400. Data is routed to either the main nozzles or the redundant nozzles by the data router 219 depending on the state of the appropriate signal of the fault status bus.

The print head shown in figure 1 is simplified, and does not show various means of improving manufacturing yield, such as block fault tolerance. Drive circuits for different configurations of print head can readily be derived from the apparatus disclosed herein.

Digital information representing patterns of dots to be printed on the recording medium is stored in the Page or Band memory 1513. Data in 32 bit words representing dots of one color is read from the Page or Band memory 1513 using addresses selected by the address mux 417 and control signals generated by the Memory Interface 418. These addresses are generated by Address generators 411, which forms part of the 'Per color circuits' 410, for which there is one for each of the six color components. The addresses are generated based on the positions of the nozzles in relation to the print medium. As the relative position of the nozzles may be different for different print heads, the Address generators 411 are preferably made programmable. The Address generators 411 normally generate the address corresponding to the position of the main nozzles. However, when faulty nozzles are present, locations of blocks of nozzles containing faults can be marked in the Fault Map RAM 412. The Fault Map RAM 412 is read as the page is printed. If the memory indicates a fault in the block of nozzles, the address is altered so that the Address generators 411 generate the address corresponding to the position of the redundant nozzles. Data read from the Page or Band memory 1513 is latched by the latch 413 and converted to four sequential bytes by the multiplexer 414. Timing of these bytes is adjusted to match that of data representing other colors by the FIFO 415. This data is then buffered by the buffer 430 to form the 48 bit main data bus to the print head 50. The data is buffered as the print head may be located a relatively long distance from the head control ASIC. Data from the Fault Map RAM 412 also forms the input to the FIFO 416. The timing of this data is matched to the data output of the FIFO 415, and buffered by the buffer 431 to form the fault status bus.

The programmable power supply 320 provides power for the head 50. The voltage of the power supply 320 is controlled by the DAC 313, which is part of a RAM and DAC combination (RAMDAC) 316. The RAMDAC 316 contains a dual port RAM 317. The contents of the dual port RAM 317 are programmed by the Microcontroller 315. Temperature is compensated by changing the contents of the dual port RAM 317. These values are calculated by the microcontroller 315 based on temperature sensed by a thermal sensor 300. The thermal sensor 300 signal connects to the Analog to Digital Converter (ADC) 311. The ADC 311 is preferably incorporated in the Microcontroller 315.

The Head Control ASIC 400 contains control circuits for thermal lag compensation and print density. Thermal lag compensation requires that the power supply voltage to the head 50 is a rapidly time-varying voltage which is synchronized with the enable pulse for the heater. This is achieved by programming the programmable power supply 320 to produce this voltage. An analog time varying programming voltage is produced by the DAC 313 based upon data read from the dual port RAM 317. The data is read according to an address produced by the counter 403. The counter 403 produces one complete cycle of addresses during the period of one enable pulse. This synchronization is ensured, as the counter 403 is clocked by the system clock 408, and the top count of the counter 403 is used to clock the enable counter 404. The count from the enable counter 404 is then decoded by the decoder 405 and buffered by the buffer 432 to produce the enable pulses for the head 50. The counter 403 may include a prescaler if the number of states in the count is less than the number of clock periods in one enable pulse. Sixteen voltage states are adequate to accurately compensate for the heater thermal lag. These sixteen states can be specified by using a four bit connection between the counter 403 and the dual port RAM 317. However, these sixteen states may not be linearly spaced in time. To allow non-linear timing of these states the counter 403 may also include a ROM or other device which causes the counter 403 to count in a non-linear fashion. Alternatively, fewer than sixteen states may be used.

For print density compensation, the printing density is detected by counting the number of pixels to which a drop is to be printed (`on' pixels) in each enable period. The 'on' pixels are counted by the On pixel counters 402. There is one On pixel counter 402 for each of the eight enable phases. The number of enable phases in a print head in accordance with the invention depend upon the specific design. Four, eight, and sixteen are convenient numbers, though there is no requirement that the number of enable phases is a power of two. The On Pixel Counters 402 can be composed of combinatorial logic pixel counters 420 which determine how many bits in a nibble of data are on. This number is then accumulated by the adder 421 and accumulator 422. A latch 423 holds the accumulated value valid for the duration of the enable pulse. The multiplexer 401 selects the output of the latch 423 which corresponds to the current enable phase, as determined by the enable counter 404. The output of the multiplexer 401 forms part of the address of the dual port RAM 317. An exact count of the number of 'on' pixels is not necessary, and the most significant four bits of this count are adequate.

Combining the four bits of thermal lag compensation address and the four bits of print density compensation address means that the dual port RAM 317 has an 8 bit address. This means that the dual port RAM 317 contains 256 numbers, which are in a two dimensional array. These two dimensions are time (for thermal lag compensation) and print density. A third dimension - temperature - can be included. As the ambient temperature of the head varies only slowly, the microcontroller 315 has sufficient time to calculate a matrix of 256 numbers compensating for thermal lag and print density at the current temperature. Periodically (for example, a few times a second), the microcontroller senses the current head temperature and calculates this matrix.

The clock to the print head 50 is generated from the system clock 408 by the Head clock generator 407, and buffered by the buffer 406. To facilitate testing of the Head control ASIC, JTAG test circuits 499 may be included.

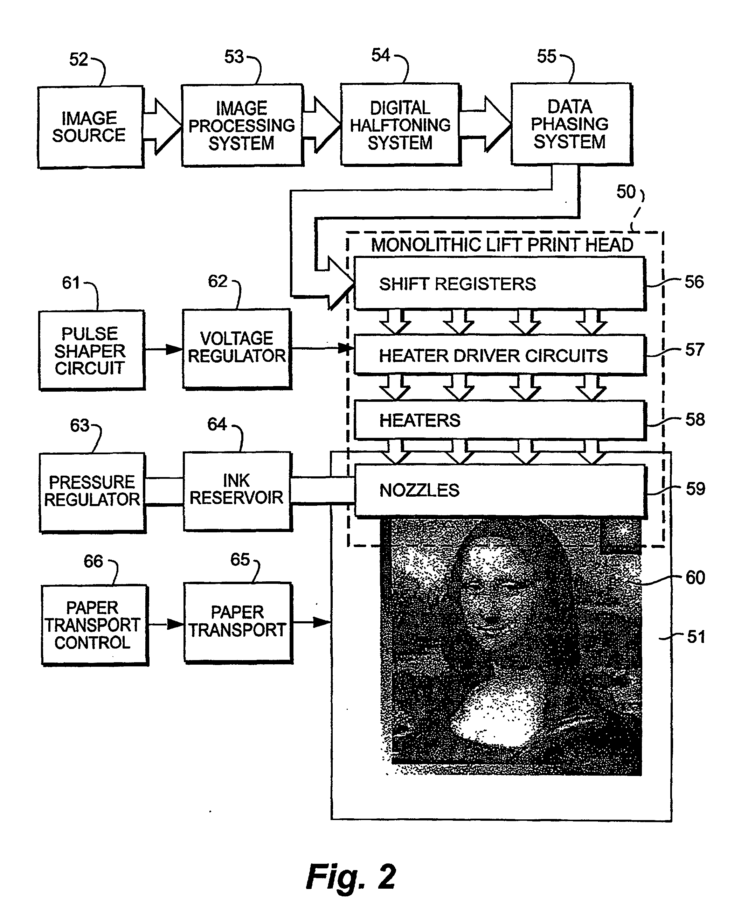

A schematic diagram of a digital electronic printing system using a print head of this invention is shown in Figure 2. This shows a monolithic printing head 50 printing an image 60 composed of a multitude of ink drops onto a recording medium 51. This medium will typically be paper, but can also be overhead transparency film, cloth, or many other substantially flat surfaces which will accept ink drops. The image to be printed is provided by an image source 52, which may be any image type which can be converted into a two dimensional array of pixels. Typical image sources are image scanners, digitally stored images, images encoded in a page description language (PDL) such as Adobe Postscript™, Adobe Postscript™ level 2, or Hewlett-Packard PCL 5™, page images generated by a procedure-call based rasterizer, such as Apple™ QuickDraw, Apple™ Quickdraw GX, or Microsoft™ GDI, or text in an electronic form such as ASCII. This image data is then converted by an image processing system 53 into a two dimensional array of pixels suitable for the particular printing system. This may be color or monochrome, and the data will typically have between 1 and 32 bits per pixel, depending upon the image source and the specifications of the printing system. The image processing system may be a raster image processor (RIP) if the source image is a page description, or may be a two dimensional image processing system if the source image is from a scanner.

If continuous tone images are required, then a halftoning system 54 is necessary. Suitable types of halftoning are based on *dispersed dot ordered dither* or *error diffusion.* Variations of these, commonly known as *stochastic screening* or *frequency modulation screening* are suitable. The halftoning system commonly used for offset printing - *clustered dot ordered dither -* is not recommended, as effective image resolution is unnecessarily wasted using this technique. The output of the halftoning system is a binary monochrome or color image at the resolution of the printing system according to the present invention.

The binary image is processed by a data phasing circuit 55 (which may be incorporated in a Head Control ASIC 400 as shown in figure 1) which provides the pixel data in the correct sequence to the data shift registers 56. Data sequencing is required to compensate for the nozzle arrangement and the movement of the paper. When the data has been loaded into the shift registers 56, it is presented in parallel to the heater driver circuits 57. At the correct time, the driver circuits 57 will electronically connect the corresponding heaters 58 with the voltage pulse generated by the pulse shaper circuit 61 and the voltage regulator 62. The heaters 58 heat the tip of the nozzles 59, affecting the physical characteristics of the ink. Ink drops 60 escape from the nozzles in a pattern which corresponds to the digital impulses which have been applied to the heater driver circuits. The pressure of the ink in the ink reservoir 64 is regulated by the pressure regulator 63. Selected drops of ink drops 60 are separated from the body of ink by the chosen drop separation means, and contact the recording medium 51. During printing, the recording medium 51 is continually moved relative to the print head 50 by the paper transport system 65. If the print head 50 is the full width of the print region of the recording medium 51, it is only necessaly to move the recording medium 51 in one direction, and the print head 50 can remain fixed. If a smaller print head 50 is used, it is necessary to implement a raster scan system. This is typically achieved by scanning the print head 50 along the short dimension of the recording medium 51, while moving the recording medium 51 along its long dimension.

### Integrated Drive Circuitry

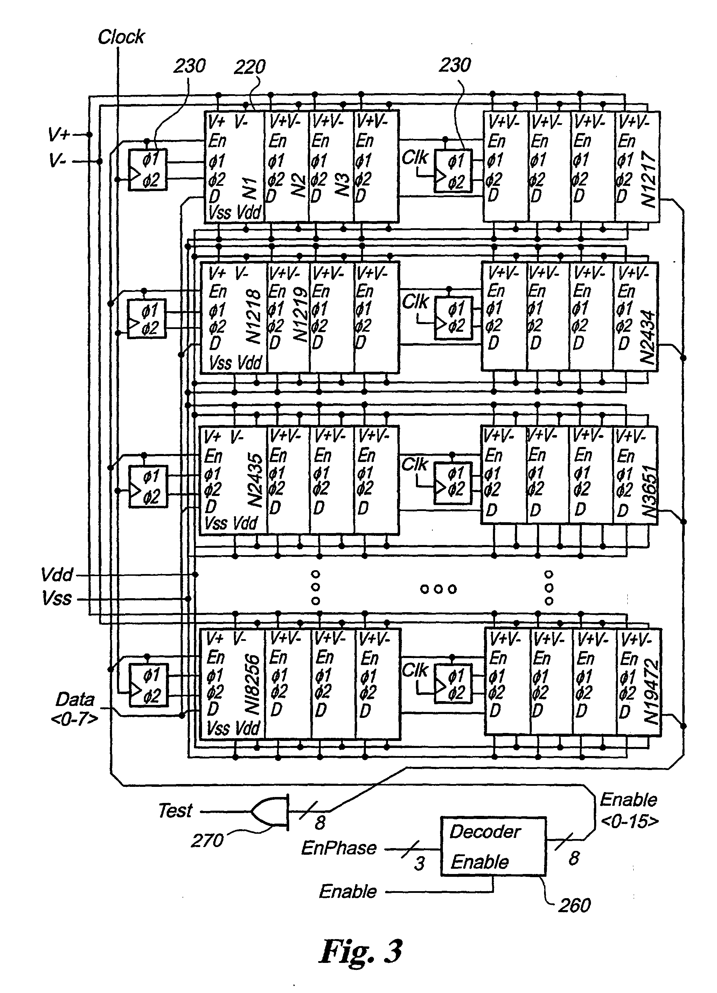

Figure 3 shows one preferred embodiment of the invention comprising a print head with integrated drive circuitry. This print head has 19,840 nozzles, which are connected using eight shift registers, each of which contains 2,480 drive modules 220. For simplicity of the drawing, only eight of the 2,480 drive modules 220 in each shift register are shown. Also, only four of the eight shift registers are shown. The preferred circuit for integrated nozzle drivers on large print heads incorporates fault tolerance. This is omitted from this diagram for simplicity.

The clock generation module 230 generates a gated two phase clock for the shift registers. This gated two phase clock allows the elimination of the parallel registers that would otherwise be required to hold the data constant during the heater enable pulse. The two clock phases allow the use of dynamic shift registers instead of static shift registers, further reducing the number of integrated transistors required for each nozzle driver.

The three EnPhase signals are the input of a three line to eight line decoder 260. The Eight outputs of the decoder 260 are connected to the enable controls of the drive modules 220. As each output of the decoder 260 drives 2,480 loads distributed over the length of the print head, the output transistors of the decoder must be either very large, or buffered multiple times, to obtain fast switching.

The inclusion of the decoder 260 reduces the number of external connections required to control which of the eight groups is activated from eight to four.

The print head has only a small number of connections. There are:
1) V⁺, which is the positive power connection to the heaters.
2) V⁻, which is the return power (ground) connection to the heater drive transistors.
3) V_{dd}, which is the positive power connection to the shift registers and data enable circuits.
4) Vₛₛ, which is the return power (ground) connection for the shift registers and data enable circuits.
5) Clock, which is the main system clock, used for clocking the shift registers.
6) EnPhase, which is firing phase enable selection.
7) Enable, which is a global enable signal. If this signal is inactive, no printing can occur.
8) Data<0-7>, which are the eight serial data input signals which control which nozzles are to be energized.
9) Test, which is an Or function of the data at the output of the shift registers. The eight outputs are wired to the inputs of a eight input Or gate 270. This output can be used for testing the integrity of the shift registers in the print head. Only one shift register can be tested at a time. More sophisticated test circuitry can be included on the print head using well known techniques.

As with most manufactured products, the cost of manufacture is important. If the device costs too much to manufacture, it will not succeed commercially.

### Fault tolerance in integrated printing heads

In one embodiment, the invention provides an integrated printing head which includes fault tolerance circuitry. The circuitry can include:
1) a plurality of data transfer mechanisms which, in the absence of faults, transfer identical data to voting circuits;
2) a voting circuit for each nozzle driver circuit, the voting circuit determining the status of the majority of the data transfer mechanisms;
3) a plurality of drive circuits which energize a marking means depending upon the output of the corresponding voting circuit; and
4) a plurality of the means of marking a dot to a marking medium.

The invention is applicable to many types of printing mechanisms which consist of a plurality of dot marking means integrated into a single structure. Examples of such printing mechanisms include, but are not limited to, liquid ink, coincident forces drop on demand printing heads, thermal ink jet print heads, thermal wax printer heads, dye sublimation print heads, and thermal paper print heads.

### Individual nozzle drive circuit fault tolerance with voting

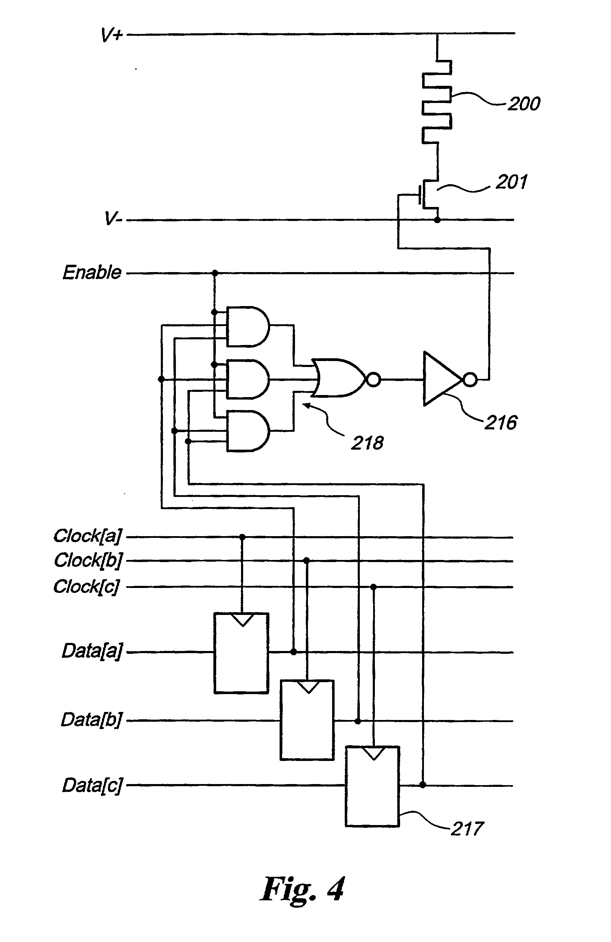

Figure 4 shows a logic representation of a drive module 220 which includes redundancy and voting circuits for each nozzle. Each shift register is implemented as three independent shift registers 217, each with independent, but synchronous, clocks. The data input Data[a,b,c] to the three shift registers is typically identical, and will only be different when there is a fault. The data is clocked into the shift register stage 217 by the appropriate clock signal Clock[a,b,c]. The clock to the shift register stops when the corresponding enable pulse is active. This ensures that the data at the output of the shift register stage 217 is stable for the duration of the enable pulse. The outputs of the three shift registers are connected to an And-Or-Invert gate 218 (the voting circuit). Each of the three And functions of the gate 218 are connected to two of the shift register outputs, in the three unique possible combinations. Each of these gates are also connected to the enable signal. Thus, the output of the And-Or-Invert gate will be active (low) when any two of the shift register outputs, and the enable pulse, is active (high). An inverting buffer 216 amplifies the signal to enable it to quickly drive the high capacitance of the gate of the drive transistor 201. When the gate of the drive transistor 201 is raised to a sufficient voltage, the transistor will turn on, providing a conduction path for current which flows to the heater 200, thus energizing it.

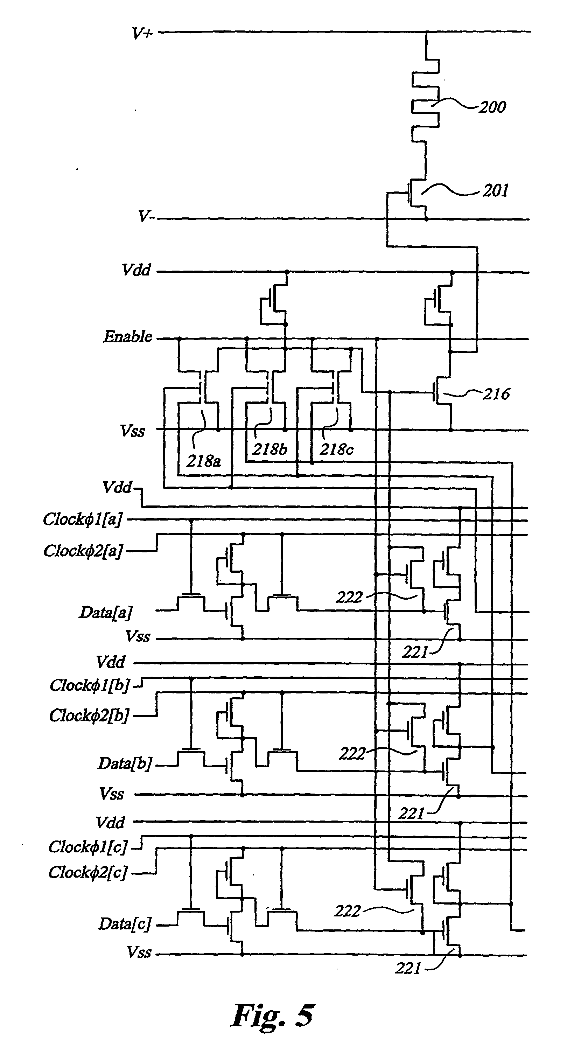

Figure 5 is a circuit representation of a drive module 220, as it may be implemented in an nMOS process. In this example, three redundant dynamic shift registers are used for fault tolerance. These shift registers shift the normally identical data streams Data[a], Data[b], and Data[c]. The dynamic shift registers are of standard nMOS construction, being composed of two inverter stages connected by pass transistors. The dynamic shift registers require a two phase clock being Clock φ1[a,b,c] and Clock φ2[a,b,c]. The outputs of the three shift registers are connected to the And-Or-Invert gate 218. This gate is composed of three triple gate n channel MOS FETs 218a, 218b, and 218c. Two of the gates of each of these three MOS FETs are connected to the outputs of the shift registers in the three unique possible combinations. The other gate of each of the MOS FETs is connected to the enable signal Enable.

When the enable pulse for the nozzle group is activated, the data in the shift register is enabled by the transistors 218a, 218b, and 218c. The Or connection of these three transistors means that if the data in any two of the shift registers are active, the output of the And-Or-Invert gate 218 will also be active. This signal is inverted and buffered by the inverter 216, and used to control the drive transistor 201. When the enable pulse is active, the two clock phases Clock φ1 and Clock φ2 are disabled. Data stability is maintained by turning on the pass transistors 222 with the enable signal. These pass transistors connect the output of the And-Or-Invert gate 218 to the gates of the second inverter 221 in each of the shift registers, creating a stable data loop.

At first, this type of fault tolerance may seem excessive, as the number of small signal transistors is almost tripled. However, the minimum total chip area is determined by the mechanical constraints. The length of the chip is determined by the width of simultaneous printing required, plus a small margin for control circuitry and wire bonding. In this case, the length of the chip is 210 mm. The width of the chip is primarily determined by the necessity to maintain mechanical strength, and may be approximately 4 mm. This is a very large chip area, much of which is available for the fabrication of fault tolerance circuits to increase yield. In most cases, the implementation of fault tolerance is a compromise between the extra yield gained by reducing the number of defective chips, and the reduction in yield due to larger chip size. In this case, a certain amount of fault tolerance circuits can be implemented with no increase in chip size.

The circuitry is so arranged that a fault in the voting circuit will not cause dots to be printed where none are specified. This is important, as additional types of fault tolerance can print missing dots, but cannot erase erroneously printed dots. This is achieved by connecting the enable circuit to the inputs of the And-Or-Invert gate 218, rather than as a separate And function occurring after the gate 218. If the gate 218 is faulty, the output is likely to be either stuck high, or stuck low. If the output of the gate 218 is stuck high, then the drive transistor 201 will never be turned on, and the heater will never be actuated, so a drop will never be ejected from that nozzle. If the output of the gate 218 is stuck low, the drive transistor 201 will be always turned on. This will deliver eight times the average maximum design power to the heater 200. If the heater 200 is designed to fuse at less than this amount of power overload, then the heater will fuse and become an 'open circuit'. No subsequent drops will be ejected from the nozzle. Alternatively, the drive circuit can be designed to fail when stressed by continual operation rather than pulsed operation.

It can readily be seen that placing the enable function after the voting circuit 218 will not achieve this. If the output of the voting circuit 218 is stuck low, the enable gate will only turn on the drive transistor 201 during the correct enable phase of the nozzle which is one eighth of the time available. Therefore, the heater will not be operated at above its maximum design rating, and will not fail. As a result, a line of dots will be printed which cannot be erased by subsequent overprinting by redundant nozzles and fault tolerance circuitry.

The foregoing describes a number of preferred embodiments of the present invention. Modifications, obvious to those skilled in the art, can be made thereto without departing from the scope of the invention.

## Claims

1. An integrated printing head (50) which includes a plurality of marking means (59, 200), each having an associated driver circuit (57, 201, 216), said head **characterized by** comprising at least three data transfer mechanisms (217) which, in the absence of faults, transfer identical data to corresponding voting circuits (218a, b, c) which are coupled to respective driver circuits (57, 201, 216), for determining the status of the majority of the data transfer mechanisms (217), whereby said driver circuits (57, 201, 216) will energize their associated marking means (59, 200) depending upon the output of their respective voting circuit (218a, b, c).

2. The printing head according to Claim 1, wherein said voting circuits, said respective driver circuits and their marking means are adapted to insure that no dots are marked if the output of a voting circuit is either stuck high or stuck low.

3. The printing head according to Claim 1 or 2, wherein each said data transfer mechanism is a shift register.

4. The printing head according to Claim 1 or 2, wherein said voting circuit comprises an and gate, or gate and an inverter, with an enable signal connected to the inputs of said and gates.

5. The printing head according to Claim 1 or 2, wherein said marking means is a thermal ink jet nozzle.

6. The printing head according to Claim 1 or 2, wherein said marking means is a thermal wax printer actuator.

7. The printing head according to Claim 1 or 2, wherein said marking means is a dye sublimation printer actuator.

8. The printing head according to Claim 1 or 2, wherein said marking means is a heater element that is part of a heater bar of a thermal paper printer.

9. The printing head according to Claim 1, wherein said printhead comprises:
(a) a plurality of drop-emitter nozzles;
(b) a body of ink associated with said nozzles;
(c) pressure means for subjecting ink in said body of ink to a pressure of at least 2% above ambient pressure, at least during drop selection and separation;
(d) drop selection means for selecting predetermined nozzles and generating a difference in meniscus position between ink in selected and non-selected nozzles; and
(e) drop separating means for causing ink from selected nozzles to separate as drops from the body of ink, while allowing ink to be retained in non-selected nozzles.

10. The printing head according to Claim 1, wherein said printhead comprises:
(a) a plurality of drop-emitter nozzles;
(b) a body of ink associated with said nozzles;
(c) drop selection means for selecting predetermined nozzles and generating a difference in meniscus position between ink in selected and non-selected nozzles; and
(d) drop separating means for causing ink from selected nozzles to separate as drops from the body of ink, while allowing ink to be retained in non-selected nozzles, said drop selecting means being capable of producing said difference in miniscus position in the absence of said drop separation means.

11. The printing head according to Claim 1, wherein said printhead comprises:
(a) a plurality of drop-emitter nozzles;
(b) a body of ink associated with said nozzles, said ink exhibiting a surface tension decrease of at least 10 mN/m over a 30°C temperature range;
(c) drop selection means for selecting predetermined nozzles and generating a difference in meniscus position between ink in selected and non-selected nozzles; and
(d) drop separating means for causing ink from selected nozzles to separate as drops from the body of ink, while allowing ink to be retained in non-selected nozzles.

## Patentansprüche

1. Integrierter Druckkopf (50) mit einer Vielzahl von Markierungsmitteln (59, 200), von denen jedes eine ihm zugeordnete Treiberschaltung (57, 201, 216) aufweist, **gekennzeichnet durch** mindestens drei Datenübertragungseinrichtungen (217), die bei Nichtauftreten von Fehlern identische Daten zu entsprechenden Wahlschaltkreisen (218a, b, c) übertragen, die an jeweilige Treiberschaltungen (57, 201, 216) gekoppelt sind, um den Status der Mehrzahl der Datenübertragungseinrichtungen (217) zu bestimmen, wobei die Treiberschaltungen (57, 201, 216) die ihnen jeweils zugeordneten Markierungsmittel (59, 200) in Abhängigkeit vom Ausgang der jeweiligen Wahlschaltkreise (218a, b, c) aktivieren.

2. Druckkopf nach Anspruch 1, **dadurch gekennzeichnet, dass** die Wahlschaltkreise, die jeweiligen Treiberschaltungen und ihre Markierungsmittel sicherstellen, dass keine Punkte markiert sind, wenn der Ausgang eines Wahlschaltkreises entweder oben oder unten festhängt.

3. Druckkopf nach Anspruch 1 oder 2, **dadurch gekennzeichnet, dass** jede Datenübertragungseinrichtung ein Schieberegister ist.

4. Druckkopf nach Anspruch 1 oder 2, **dadurch gekennzeichnet, dass** der Wahlschaltkreis ein UND-Gate, ein ODER-Gate und einen Inverter aufweist, mit einem Freigabesignal, das an die Eingänge des UND-Gates angeschlossen ist.

5. Druckkopf nach Anspruch 1 oder 2, **dadurch gekennzeichnet, dass** es sich bei den Markierungsmitteln um eine Thermo-Tintenstrahldüse handelt.

6. Druckkopf nach Anspruch 1 oder 2, **dadurch gekennzeichnet, dass** es sich bei den Markierungsmitteln um eine Betätigungsvorrichtung für einen Thermowachsdrucker handelt.

7. Druckkopf nach Anspruch 1 oder 2, **dadurch gekennzeichnet, dass** es sich bei den Markierungsmitteln um eine Betätigungsvorrichtung für einen Farbsublimationsdrucker handelt.

8. Druckkopf nach Anspruch 1 oder 2, **dadurch gekennzeichnet, dass** es sich bei den Markierungsmitteln um ein Heizelement handelt, das Teil eines Heizstabes eines Thermodruckers ist.

9. Druckkopf nach Anspruch 1, **gekennzeichnet durch**
(a) eine Vielzahl Tropfen abgebender Düsen,
(b) einen den Düsen zugeordneten Tintenbehälter,
(c) eine Druckvorrichtung, welche die Tinte im Tintenbehälter zumindest während der Tropfenauswahl und -ablösung einem Druck aussetzt, der mindestens 2% über dem Umgebungsdruck liegt,
(d) eine Tropfenauswahlvorrichtung zum Auswählen vorbestimmter Düsen und Erzeugen eines Unterschiedes in der Meniskusstellung zwischen Tinte in ausgewählten und Tinte in nicht ausgewählten Düsen, und
(e) eine Tropfenablösevorrichtung, die bewirkt, dass sich Tinte in ausgewählten Düsen als Tropfen aus dem Tintenbehälter ablöst, während Tinte in nicht ausgewählten Düsen zurückhaltbar ist.

10. Druckkopf nach Anspruch 1, **gekennzeichnet durch**
(a) eine Vielzahl Tropfen abgebender Düsen,
(b) einen den Düsen zugeordneten Tintenbehälter,
(c) eine Tropfenauswahlvorrichtung zum Auswählen vorbestimmter Düsen und Erzeugen eines Unterschiedes in der Meniskusstellung zwischen Tinte in ausgewählten und nicht ausgewählten Düsen, und
(d) eine Tropfenablösevorrichtung, die bewirkt, dass sich Tinte in ausgewählten Düsen als Tropfen aus dem Tintenbehälter ablöst, während Tinte in nicht ausgewählten Düsen zurückhaltbar ist, wobei die Tropfenauswahlvorrichtung den Unterschied in der Meniskusstellung in Abwesenheit der Tropfenablösevorrichtung erzeugt.

11. Druckkopf nach Anspruch 1, **gekennzeichnet durch**
(a) eine Vielzahl Tropfen abgebender Düsen,
(b) einen den Düsen zugeordneten Tintenbehälter, wobei die Tinte eine Reduktion ihrer Oberflächenspannung von mindestens 10mN/m über einen Temperaturbereich von 30°C aufweist,
(c) eine Tropfenauswahlvorrichtung zum Auswählen vorbestimmter Düsen und Erzeugen eines Unterschiedes in der Meniskusstellung zwischen Tinte in ausgewählten und nicht ausgewählten Düsen, und
(d) eine Tropfenablösevorrichtung, die bewirkt, dass sich Tinte in ausgewählten Düsen als Tropfen aus dem Tintenbehälter ablöst, während Tinte in nicht ausgewählten Düsen zurückhaltbar ist.

## Revendications

1. Tête d'impression intégrée (50) qui comprend une pluralité de moyens de marquage (59, 200), chacun possédant un circuit d'attaque associé (57, 201, 216), ladite tête étant **caractérisée par** des mécanismes de transfert de données (217), qui, en l'absence de défaut, transfèrent les données identiques aux circuits de vote correspondants (218a, b, c) qui sont couplés aux circuits d'attaque respectifs (57, 201, 216) afin de déterminer l'état de la majorité des mécanismes de transfert (217), d'où il résulte que lesdits circuits d'attaque (57, 201, 216) alimenteront leurs moyens de marquage associés (59, 200) en fonction de la sortie de leurs circuits de vote respectifs (218a, b, c).

2. Tête d'impression intégrée selon la revendication 1, dans laquelle lesdits circuits de vote, lesdits circuits d'attaque respectifs et leurs moyens de marquage sont adaptés afin d'assurer qu'aucun point n'est marqué si la sortie d'un circuit de vote est soit coincée en haut soit coincée en bas.

3. Tête d'impression intégrée selon la revendication 1 ou 2, dans laquelle chacun desdits mécanismes de transfert de données est un registre à décalage.

4. Tête d'impression selon la revendication 1 ou 2, dans laquelle ledit circuit de vote comprend une porte ET, une porte OU et un inverseur (porte NON), avec un signal de validation connecté aux entrées desdites portes ET.

5. Tête d'impression intégrée selon la revendication 1 ou 2, dans laquelle ledit moyen de marquage est une buse de jet d'encre thermique.

6. Tête d'impression intégrée selon la revendication 1 ou 2, dans laquelle ledit moyen de marquage est un actionneur d'imprimante à transfert thermique.

7. Tête d'impression intégrée selon la revendication 1 ou 2, dans laquelle ledit moyen de marquage est un actionneur d'imprimante à sublimation.

8. Tête d'impression intégrée selon la revendication 1 ou 2, dans laquelle ledit moyen de marquage est un élément chauffant qui est une partie d'une règle chauffante d'une imprimante à papier thermique.

9. Tête d'impression selon la revendication 1, ladite tête d'impression comprenant :
(a) une pluralité de buses d'émission d'encre ;
(b) un corps d'encre associé aux dites buses ;
(c) un moyen de pression pour soumettre ladite encre dans ledit corps d'encre à une pression supérieure d'au moins 2 % à la pression ambiante, au moins pendant la sélection et la séparation des gouttes ;
(d) un moyen de sélection des gouttes pour sélectionner des buses prédéterminées et générer une différence de position du ménisque de l'encre dans les buses sélectionnées et non sélectionnées ; et
(e) un moyen de séparation des gouttes pour amener l'encre provenant des buses sélectionnées à se séparer en gouttes à partir du corps d'encre, tout en permettant de retenir l'encre dans les buses non sélectionnées.

10. Tête d'impression selon la revendication 1, ladite tête d'impression comprenant :
(a) une pluralité de buses d'émission d'encre ;
(b) un corps d'encre associé aux dites buses ;
(c) un moyen de sélection des gouttes pour sélectionner les buses prédéterminées et générer une différence de position du ménisque de l'encre entre les buses sélectionnées et les buses non sélectionnées ; et
(d) un moyen de séparation des gouttes pour amener l'encre provenant des buses sélectionnées à se séparer en gouttes à partir du corps d'encre, tout en permettant de retenir l'encre dans les buses non sélectionnées, ledit moyen de sélection des gouttes étant capable de produire ladite différence de position du ménisque en l'absence dudit moyen de séparation des gouttes.

11. Tête d'impression selon la revendication 1, ladite tête d'impression comprenant :
(a) une pluralité de buses d'émission d'encre ;
(b) un corps d'encre associé aux dites buses, ladite encre présentant une diminution de la tension de surface d'au moins 10mN/m sur une plage de température de 30° C ;
(c) un moyen de sélection des gouttes pour sélectionner les buses prédéterminées et générer une différence de position du ménisque de l'encre entre les buses sélectionnées et les buses non sélectionnées ; et
(d) un moyen de séparation des gouttes pour amener l'encre provenant des buses sélectionnées à se séparer en gouttes à partir du corps d'encre, tout en permettant de retenir l'encre dans les buses non sélectionnées.
